(19) Europäisches Patentamt
European Patent Office
Office européen des brevets

(11) **EP 4 726 351 A1**

(12) **EUROPEAN PATENT APPLICATION**
published in accordance with Art. 153(4) EPC

(43) Date of publication:
**15.04.2026 Bulletin 2026/16**

(21) Application number: **24747969.4**

(22) Date of filing: **15.01.2024**

(51) International Patent Classification (IPC):
**G01M 13/028** (2019.01)    **F16H 25/24** (2006.01)

(52) Cooperative Patent Classification (CPC):
**F16H 25/24; G01M 13/028**

(86) International application number:
**PCT/JP2024/000793**

(87) International publication number:
**WO 2024/252713 (12.12.2024 Gazette 2024/50)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **06.06.2023 JP 2023093206**

(71) Applicant: **NSK Ltd.
Tokyo 141-8560 (JP)**

(72) Inventors:
• **KITAUCHI, Seishiro
Fujisawa-shi, Kanagawa 251-8501 (JP)**
• **HASHIMOTO, Satoshi
Fujisawa-shi, Kanagawa 251-8501 (JP)**

(74) Representative: **Grünecker Patent- und
Rechtsanwälte
PartG mbB
Leopoldstraße 4
80802 München (DE)**

(54) **STATE DETERMINATION DEVICE AND STATE DETERMINATION METHOD FOR BALL SCREW**

(57)    Provided is a state determination device and a state determination method for a ball screw capable of improving noise resistance. Included are: a vibration information generating unit (201) that generates vibration information indicating a relationship between a nut position of the ball screw and a frequency-vibration level characteristic that varies depending on to the nut position on the basis of a vibration signal acquired by a vibration sensor (21) during operation of the ball screw; and a determination unit (202) that executes state determination processing of the ball screw on the basis of first vibration information generated on the basis of a vibration signal acquired in a first period and second vibration information acquired in a second period after the first period.

FIG.2

EP 4 726 351 A1

**Description**

Field

The present invention relates to a state determination device and a state determination method for a ball screw.

Background

Patent Literature 1 describes that, in a rolling linear motion device such as a ball screw, vibration strength decreases and that inspection accuracy of the operation state decreases in a case where a raceway surface is deformed due to movement of a rolling element or pre-load is lowered due to wear of the rolling element. Conventionally, there is disclosed technology of monitoring a vibration value of a vibration signal in a specific frequency band and detecting a decrease in the pre-load applied to a ball screw (for example, Patent Literature 2).

Citation List

Patent Literatures

    Patent Literature 1: JP 2009-198398 A
    Patent Literature 2: WO 2020/090479 A

Summary

Technical Problem

Patent Literature 2 describes monitoring a vibration value of a vibration signal in a low frequency band from 10 Hz to 10 kHz. However, in the low frequency band from 10 Hz to 10 kHz, it is difficult to eliminate the influence of noise components generated at a production site or the like where a ball screw is used, and thus it is difficult to apply the frequency band.
The present invention has been made in view of the above disadvantages, and an object of the invention is to provide a state determination device and a state determination method for a ball screw capable of improving noise resistance.

Solution to Problem

To achieve the above object, a state determination device for a ball screw according to an embodiment of the present invention, comprising:

    a vibration information generating unit that generates vibration information indicating a relationship between a nut position of the ball screw and a frequency-vibration level characteristic that varies depending on to the nut position on a basis of a vibration signal acquired by a vibration sensor during operation of the ball screw; and
    a determination unit that executes state determination processing of the ball screw on a basis of first vibration information generated on a basis of a vibration signal acquired in a first period and second vibration information acquired in a second period after the first period.

In the above configuration, the noise resistance can be improved by applying first vibration information, generated on the basis of a vibration signal acquired in a first period in which it is presumed that the pre-load is normally applied, to second vibration information generated on the basis of a vibration signal acquired in a second period in which state determination of the ball screw is performed.
As a desirable embodiment of the state determination device for a ball screw, the vibration information generating unit preferably executes averaging processing of a plurality of pieces of first vibration information acquired in the first period.
As a result, the first vibration information from which nonstationary continuous spectra have been removed is obtained.
As a desirable embodiment of the state determination device for a ball screw, the vibration information generating unit preferably generates first vibration information from which a periodic vibration component of the vibration signal acquired in the first period is removed.

As a result, the first vibration information from which discrete spectra have been removed is obtained.

As a desirable embodiment of the state determination device for a ball screw, the vibration information generating unit preferably executes averaging processing of a plurality of pieces of first vibration information acquired in the first period.

As a result, the first vibration information from which nonstationary continuous spectra have been removed is obtained.

As a preferable embodiment of the state determination device for a ball screw, the vibration information generating unit preferably executes averaging processing of a plurality of pieces of second vibration information acquired in the second period.

As a result, the second vibration information from which nonstationary continuous spectra have been removed is obtained.

As a desirable embodiment of the state determination device for a ball screw, the vibration information generating unit preferably generates second vibration information from which a periodic vibration component of a vibration signal acquired in the second period is removed.

As a result, the second vibration information from which discrete spectra have been removed is obtained.

As a desirable embodiment of the state determination device for a ball screw, preferably further comprising: a processing unit that calculates third vibration information obtained by multiplying the second vibration information by the first vibration information.

As a result, third vibration information in which noise components uncorrelated with each other between the first vibration information and the second vibration information are relatively reduced is obtained.

As a desirable embodiment of the state determination device for a ball screw, the determination unit preferably determines a degree of wear of the ball screw on a basis of a statistical value of the third vibration information.

As a result, the noise resistance can be improved, and the determination accuracy of the degree of wear of the ball screw can be improved.

As a desirable embodiment of the state determination device for a ball screw, preferably further comprising: a processing unit that calculates a degree of coincidence of the second vibration information with respect to the first vibration information.

Further, as a desirable embodiment of the state determination device for a ball screw, the determination unit preferably determines a degree of wear of the ball screw on a basis of the degree of coincidence.

As a result, the noise resistance can be improved, and the determination accuracy of the degree of wear of the ball screw can be improved.

A state determination method for a ball screw according to an embodiment of the present invention, comprising:

a first step of generating first vibration information indicating a relationship between a nut position of the ball screw and a frequency-vibration level characteristic that varies depending on the nut position on a basis of a vibration signal acquired during operation of the ball screw in a first period;

a second step of generating second vibration information indicating a relationship between the nut position of the ball screw and the frequency-vibration level characteristic that varies depending on the nut position on a basis of a vibration signal acquired during operation of the ball screw in a second period after the first period; and

a third step of executing state determination processing of the ball screw on a basis of the first vibration information and the second vibration information.

In the above configuration, the noise resistance can be improved by applying first vibration information, generated on the basis of a vibration signal acquired in a first period in which it is presumed that the pre-load is normally applied, to second vibration information generated on the basis of a vibration signal acquired in a second period in which state determination of the ball screw is performed.

As a desirable embodiment of the state determination method for a ball screw, the first step preferably includes executing averaging processing of a plurality of pieces of first vibration information acquired in the first period.

As a result, the first vibration information from which nonstationary continuous spectra have been removed is obtained.

As a desirable embodiment of the state determination method for a ball screw, the first step preferably includes generating first vibration information from which a periodic vibration component of the vibration signal acquired in the first period is removed.

As a result, the first vibration information from which discrete spectra have been removed is obtained.

As a desirable embodiment of the state determination method for a ball screw, the first step preferably includes executing averaging processing of a plurality of pieces of first vibration information acquired in the first period.

As a result, the first vibration information from which nonstationary continuous spectra have been removed is obtained.

As a desirable embodiment of the state determination method for a ball screw, the second step preferably includes executing averaging processing of a plurality of pieces of second vibration information acquired in the second period.

As a result, the second vibration information from which nonstationary continuous spectra have been removed is obtained.

As a desirable embodiment of the state determination method for a ball screw, the second step preferably includes generating second vibration information from which a periodic vibration component of a vibration signal acquired in the second period is removed.

As a result, the second vibration information from which discrete spectra have been removed is obtained.

As a desirable embodiment of the state determination method for a ball screw, the third step preferably includes calculating third vibration information obtained by multiplying the second vibration information by the first vibration information.

As a result, the third vibration information in which noise components uncorrelated with each other between the first vibration information and the second vibration information are relatively reduced is obtained.

As a desirable embodiment of the state determination method for a ball screw, the third step preferably includes determining a degree of wear of the ball screw on a basis of a statistical value of the third vibration information.

As a result, the noise resistance can be improved, and the determination accuracy of the degree of wear of the ball screw can be improved.

As a desirable embodiment of the state determination method for a ball screw, the third step preferably includes calculating a degree of coincidence of the second vibration information with respect to the first vibration information.

As a desirable embodiment of the state determination method for a ball screw, the third step preferably includes determining a degree of wear of the ball screw on a basis of the degree of coincidence.

As a result, the noise resistance can be improved, and the determination accuracy of the degree of wear of the ball screw can be improved.

Advantageous Effects of Invention

According to the present invention, it is possible to obtain a state determination device and a state determination method for a ball screw capable of improving noise resistance.

Brief Description of Drawings

FIG. 1 is a diagram illustrating an example of a schematic configuration of a state determination system for a ball screw.

FIG. 2 is a block diagram illustrating an example of a state determination device of a ball screw according to an embodiment.

FIG. 3A is a conceptual diagram illustrating an example of vibration information generated by a vibration information generating unit.

FIG. 3B is a conceptual diagram illustrating an example of vibration information generated by the vibration information generating unit.

FIG. 4 is a flowchart illustrating an example of first vibration information acquisition processing according to a first embodiment.

FIG. 5 is a flowchart illustrating an example of second vibration information acquisition processing according to the first embodiment.

FIG. 6 is a flowchart illustrating an example of state determination processing according to the first embodiment.

FIG. 7 is a flowchart illustrating an example of state determination processing according to a modification of the first embodiment.

FIG. 8A is a conceptual diagram illustrating an example of vibration information generated by the vibration information generating unit.

FIG. 8B is a conceptual diagram illustrating an example of vibration information generated by the vibration information generating unit.

FIG. 9 is a flowchart illustrating an example of first vibration information acquisition processing according to a second embodiment.

FIG. 10 is a conceptual diagram illustrating an example of first vibration information generated by the first vibration information acquisition processing according to the second embodiment.

FIG. 11 is a flowchart illustrating an example of the first vibration information acquisition processing according to a third embodiment.

FIG. 12 is a conceptual diagram illustrating an example of first vibration information generated by first vibration information acquisition processing according to the third embodiment.

FIG. 13 is a flowchart illustrating an example of first vibration information acquisition processing according to a modification of the third embodiment.

FIG. 14 is a conceptual diagram illustrating an example of first vibration information generated by the first vibration information acquisition processing according to a modification of the third embodiment.

FIG. 15 is a flowchart illustrating an example of second vibration information acquisition processing according to a fourth embodiment.

FIG. 16 is a flowchart illustrating an example of second vibration information acquisition processing according to a modification of the fourth embodiment. Description of Embodiments

Hereinafter, modes for carrying out the invention (hereinafter, referred to as embodiments) will be described in detail with reference to the drawings. Note that the present invention is not limited by the following embodiments. In addition, components in the following embodiments include those that can be easily conceived by those skilled in the art and those that are substantially the same, namely, those within an equivalent range. Furthermore, the components disclosed in the following embodiments can be combined as appropriate.

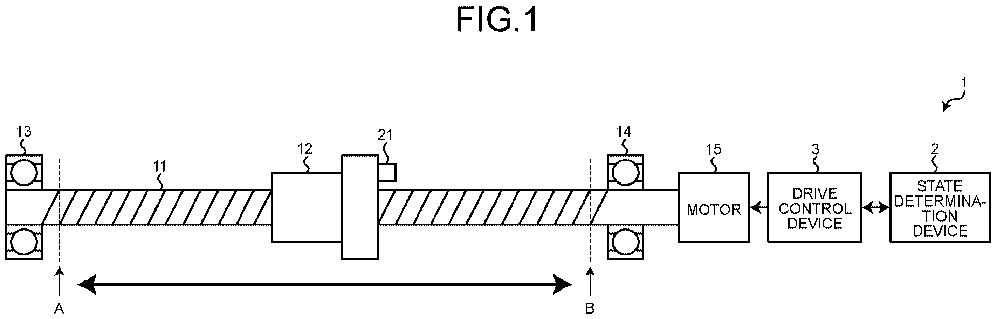

FIG. 1 is a diagram illustrating an example of a schematic configuration of a state determination system for a ball screw. The ball screw 1 includes a screw shaft 11 and a nut 12 fitted externally to the screw shaft 11 in such a manner as to be slidable via a plurality of rolling elements (not illustrated).

Both ends of the screw shaft 11 are each rotatably supported by one of bearings 13 and 14, and one end side (right side in FIG. 1) of the screw shaft 11 is connected to an output shaft of a motor 15 for driving. As the screw shaft 11 rotates, the nut 12 linearly moves in the axial direction of the screw shaft 11 (arrow direction illustrated in FIG. 1) between an end A and an end B illustrated in FIG. 1.

In the present disclosure, a state determination device 2 for the ball screw 1 according to the embodiment determines the state of the ball screw 1 on the basis of a vibration signal acquired during the operation of the ball screw 1. The state determination device 2 outputs a drive control command and a rotation control command for the motor 15 to a drive control device 3 when determining the state of the ball screw 1 according to the embodiment. The drive control device 3 drives the motor 15 on the basis of the control commands from the state determination device 2 to operate the ball screw 1 and move the nut 12 over the entire region of the screw shaft 11. The drive control device 3 outputs the rotational speed of the motor 15, in other words, the rotational speed of the screw shaft 11 of the ball screw 1 to the state determination device 2.

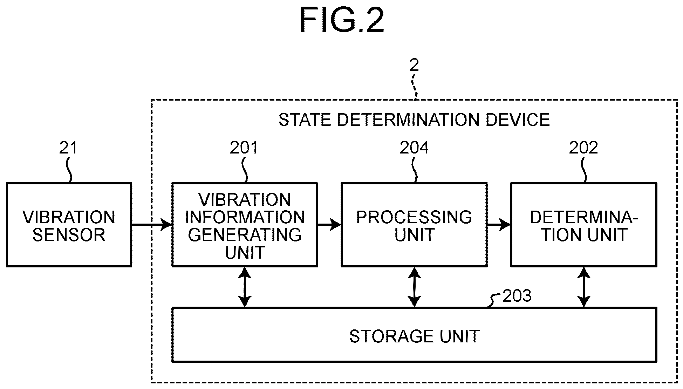

FIG. 2 is a block diagram illustrating an example of the state determination device for the ball screw according to the embodiment. As illustrated in FIG. 2, the state determination device 2 for the ball screw 1 according to the embodiment includes a vibration information generating unit 201, a determination unit 202, a storage unit 203, and a processing unit 204. A vibration signal acquired by a vibration sensor 21 during the operation of the ball screw 1 is input to the state determination device 2.

The vibration sensor 21 is installed, for example, on the nut 12 of the ball screw 1 illustrated in FIG. 1. In the present disclosure, an acceleration sensor such as an acceleration pickup exemplifies the vibration sensor 21. An acceleration detection direction by the vibration sensor 21 may be the axial direction of the screw shaft 11 (the arrow direction illustrated in FIG. 1) or may be a direction orthogonal to the axial direction of the screw shaft 11. In addition, the installation location of the vibration sensor 21 is not limited to the nut 12 as long as the vibration sensor can detect vibration during the operation of the ball screw 1. Furthermore, the vibration sensor 21 is not limited to an acceleration sensor. The vibration sensor 21 may be, for example, a displacement sensor or a sound pressure sensor such as a microphone.

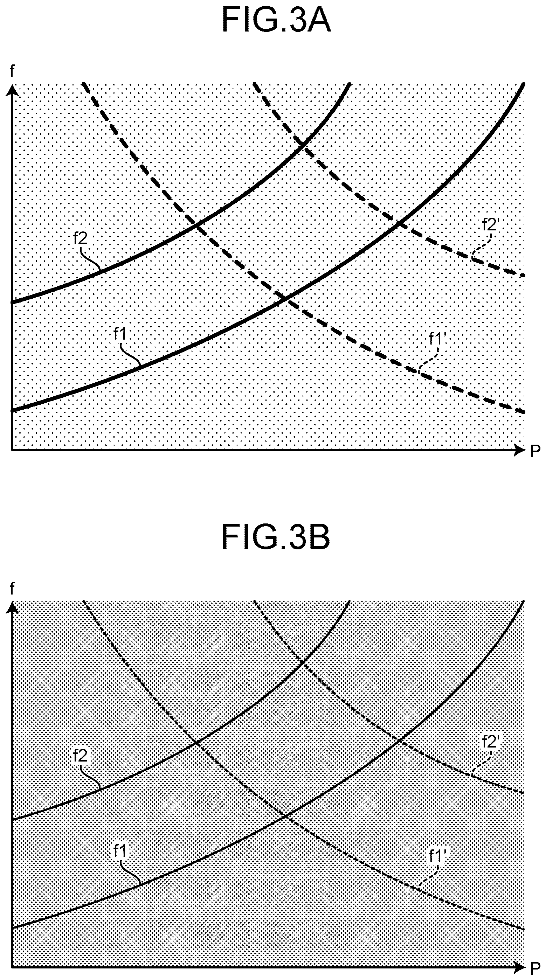

The vibration information generating unit 201 generates vibration information indicating a relationship between the nut position of the ball screw and frequency-vibration level characteristics that vary depending on the nut position on the basis of a vibration signal detected by the vibration sensor 21. FIGS. 3A and 3B are conceptual diagrams illustrating examples of vibration information generated by the vibration information generating unit. In FIGS. 3A and 3B, the horizontal axis indicates the position P of the nut 12 (hereinafter, also simply referred to as the "nut position"), and the vertical axis indicates the frequency f. In the present disclosure, the frequency range of the vibration information is, for example, within a predetermined range between 10 Hz and 10 kHz.

In a frequency spectrum of a vibration signal acquired during the operation of the ball screw 1, the natural frequency changes depending on the nut position. In FIGS. 3A and 3B, a frequency f1 corresponding to a primary natural frequency in a main eigenmode between nut positions N-A, a frequency f2 corresponding to a secondary natural frequency in the main eigenmode between the nut positions N-A, a frequency f1' corresponding to the primary natural frequency in the main eigenmode between nut positions N-B, and a frequency f2' corresponding to the secondary natural frequency in the main eigenmode between the nut positions N-B are illustrated as an example.

The degree of wear of the ball screw 1 can be grasped on the basis of the vibration information generated by the vibration information generating unit 201.

The vibration level for each frequency defined by the magnitude of a frequency spectrum varies depending on the magnitude of the pre-load applied to the ball screw 1. Specifically, for example, FIG. 3A illustrates an example of vibration information acquired in a state where a pre-load is normally applied immediately after manufacture of the ball screw 1. Meanwhile, FIG. 3B illustrates an example of vibration information acquired in a state where the pre-load of the ball screw 1 is decreased due to deformation of the raceway surface or the wear of the rolling elements caused by movement of the rolling elements.

In FIGS. 3A and 3B, the magnitude of the vibration level for each frequency defined by the magnitude of the frequency spectrum is represented by a ridge line appearing in the vibration information, in other words, a thickness of a line indicating a frequency change corresponding to each natural frequency. In addition, in FIGS. 3A and 3B, the amount and the magnitude of noise components appearing in the vibration information without correlation with each natural frequency are represented by the density of hatching. The vibration information illustrated in FIG. 3B illustrates an example in which the vibration level of each natural frequency is relatively small and the vibration level of the noise components uncorrelated with each natural frequency is large with respect to the vibration information illustrated in FIG. 3A.

In a state where the pre-load is normally applied, the vibration level of each natural frequency is high, and a frequency change corresponding to each natural frequency appears clearly (see FIG. 3A).

On the other hand, as a decrease in the pre-load of the ball screw 1 progresses, a difference between the vibration level of each natural frequency and a noise component appearing in an uncorrelated manner with each natural frequency decreases, and a frequency change corresponding to each natural frequency decreases (see FIG. 3B). Using such vibration information, in which the vibration level of each natural frequency is decreased, for determination of the degree of wear of the ball screw 1, the determination accuracy decreases.

In the present disclosure, the state determination device 2 for the ball screw 1 determines the degree of wear of the ball screw 1 using first vibration information acquired in a state where the pre-load is normally applied in advance and second vibration information acquired when state determination is performed.

Specifically, the state determination device 2 for the ball screw 1 first acquires first vibration information in a first period in which it can be assumed that a pre-load is normally applied (first vibration information acquisition processing) and acquires second vibration information in a second period in which the state determination of the ball screw 1 is performed (second vibration information acquisition processing). Then, the state determination device 2 determines the degree of wear of the ball screw 1 using the first vibration information acquired in the first period and the second vibration information acquired in the second period (state determination processing).

Note that, in the present disclosure, a state change due to damage or wear associated with operation of the ball screw 1 is to be determined. As the first period for acquiring the first vibration information and as a period in which it is presumed that the state in which the pre-load is normally applied is maintained, employed is a period from the start of operation of the ball screw 1 until about 1/10 of the period presumed as the operation period of the ball screw 1 elapses. Specifically, for example, it is preferable to set to about one month in operation of replacing the ball screw 1 every year or to set to about one year in operation of replacing the ball screw 1 every ten years.

Hereinafter, specific processing for improving the noise resistance and improving the determination accuracy of the degree of wear of the ball screw 1 will be described.

(First Embodiment)

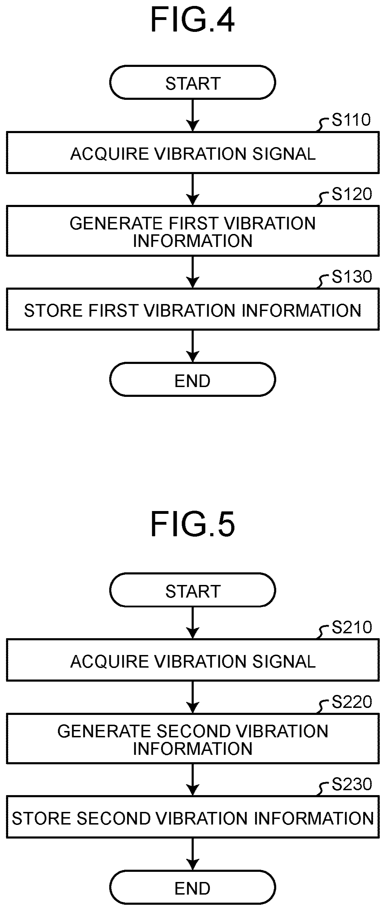

FIG. 4 is a flowchart illustrating an example of the first vibration information acquisition processing according to the first embodiment.

The state determination device 2 operates the ball screw 1 in the first period, in which it is presumed that the pre-load is normally applied, and acquires the first vibration information. Specifically, the state determination device 2 outputs the drive control command and the rotation control command for the motor 15 to the drive control device 3 in the state determination system for the ball screw 1 illustrated in FIG. 1. The drive control device 3 drives the motor 15 to operate the ball screw 1 on the basis of the control commands from the state determination device 2.

In the first vibration information acquisition processing according to the first embodiment illustrated in FIG. 4, the vibration information generating unit 201 acquires a vibration signal converted into digital data by an AD conversion processing unit (not illustrated) (step S110) and generates first vibration information indicating the relationship between the nut position of the ball screw 1 and the vibration level for each frequency on the basis of the acquired vibration signal (step S120).

The vibration information generating unit 201 stores the first vibration information generated in step S120 in the storage unit 203 (step S130) and ends the first vibration information acquisition processing.

FIG. 5 is a flowchart illustrating an example of the second vibration information acquisition processing according to the first embodiment.

First, the state determination device 2 operates the ball screw 1 in the second period in which the state determination of the ball screw 1 is performed after the first period in which the first vibration information has been generated and acquires the second vibration information. Specifically, the state determination device 2 outputs the drive control command and the rotation control command for the motor 15 to the drive control device 3 in the state determination system for the ball screw 1 illustrated in FIG. 1. The drive control device 3 drives the motor 15 to operate the ball screw 1 on the basis of the control commands from the state determination device 2.

The second vibration information acquisition processing may be executed, for example, at the time of activation of the ball screw 1 or may be executed, for example, at a predetermined time or every lapse of a predetermined time.

In the second vibration information acquisition processing according to the first embodiment illustrated in FIG. 5, the vibration information generating unit 201 acquires the vibration signal converted into digital data by the AD conversion processing unit (not illustrated) (step S210) and generates the second vibration information indicating the relationship between the nut position of the ball screw 1 and the vibration level for each frequency on the basis of the acquired vibration signal (step S220).

The vibration information generating unit 201 stores the second vibration information generated in step S220 in the storage unit 203 (step S230) and ends the second vibration information acquisition processing.

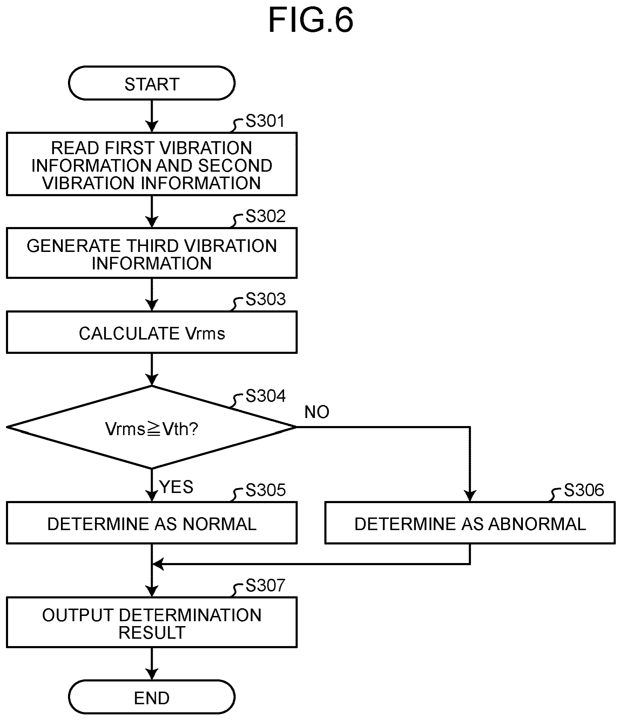

Subsequently, the state determination device 2 executes the state determination processing for the ball screw 1 using the first vibration information generated by the first vibration information acquisition processing (see FIG. 4) and the second vibration information generated by the second vibration information acquisition processing (see FIG. 5). FIG. 6 is a flowchart illustrating an example of the state determination processing according to the first embodiment.

In the state determination processing according to the first embodiment illustrated in FIG. 6, the processing unit 204 first reads the first vibration information and the second vibration information stored in the storage unit 203 (step S301).

As illustrated in FIGS. 3A and 3B, the first vibration information and the second vibration information hold a vibration value $V(P, f)$ for each pair of coordinates $(P, f)$ defined by the nut position $(P)$ and the frequency $(f)$ of the ball screw 1. In the first vibration information generated on the basis of the vibration signal acquired in the first period in which it is presumed to be in a state in which the pre-load is normally applied, for example, as illustrated in FIG. 3A, the vibration level at each natural frequency is high, and the frequency change corresponding to each natural frequency clearly appears. Meanwhile, in the second vibration information generated on the basis of the vibration signal acquired in the second period in which the state determination of the ball screw 1 is performed, for example, as illustrated in FIG. 3B, it is presumed that the vibration level at each natural frequency decreases and that the difference between the vibration level corresponding to each natural frequency and a noise component appearing in an uncorrelated manner with each natural frequency decreases.

In the present disclosure, as described above, the state determination device 2 determines the degree of wear of the ball screw 1 using the first vibration information acquired in the first period and the second vibration information acquired in the second period.

Specifically, in the first embodiment, the processing unit 204 generates third vibration information obtained by applying the first vibration information to the second vibration information (step S302) and outputs the third vibration information to the determination unit 202. More specifically, the processing unit 204 calculates the third vibration information by multiplying the second vibration information by the first vibration information.

More specifically, the processing unit 204 multiplies vibration values of corresponding coordinates between the first vibration information and the second vibration information to obtain vibration values of each pair of coordinates in the third vibration information. A vibration value $V3(P, f)$ at coordinates $(P, f)$ of the third vibration information can be expressed by the following formula (1), where a vibration value at the coordinates $(P, f)$ of the first vibration information is $V1(P, f)$ and the vibration value at the coordinates $(P, f)$ of the second vibration information is $V2(P, f)$.

$$V3(P, f) = V2(P, f) \times V1(P, f) \qquad\qquad (1)$$

As a result, the third vibration information in which noise components uncorrelated with each other between the first vibration information and the second vibration information are relatively reduced is obtained for vibration values of the natural frequency components.

The determination unit 202 determines the degree of wear of the ball screw 1 using the third vibration information generated by the processing unit 204.

Specifically, in the first embodiment, the determination unit 202 executes statistical value calculation processing on the third vibration information generated by the processing unit 204 (step S303). More specifically, for example, an effective value $V_{rms}$ of a vibration value at each pair of coordinates of the third vibration information is calculated.

The determination unit 202 performs the state determination of the ball screw 1 by executing threshold value determination processing on the statistical values calculated in step S303. Specifically, for example, the determination unit 202 determines whether or not the effective value $V_{rms}$ calculated in step S303 is greater than or equal to a threshold value $V_{th}$ held in advance (step S304). The threshold value $V_{th}$ is set by simulation as a lower limit value of effective values at which the ball screw 1 is presumed to be normal.

If the statistical value of the effective value Vrms is greater than or equal to the threshold value Vth (Vrms ≥ Vth, step S304; Yes), the determination unit 202 determines that the ball screw 1 is normal (step S305), outputs the determination result (step S307), and ends the state determination processing.

If the statistical value of the effective value Vrms is less than the threshold value Vth (Vrms < Vth, step S304; No), the determination unit 202 determines that an abnormality has occurred in the ball screw 1 (step S306), outputs the determination result (step S307), and ends the state determination processing.

In the processing according to the first embodiment described above, the first vibration information, generated on the basis of the vibration signal acquired in the first period in which it is presumed that the pre-load is normally applied, is held, and the third vibration information is generated in which the first vibration information is applied to the second vibration information generated on the basis of the vibration signal acquired in the second period in which the state determination of the ball screw 1 is performed. More specifically, the processing unit 204 calculates the third vibration information by multiplying the second vibration information by the first vibration information. Then, the statistical value calculation processing is executed on the generated third vibration information, and the calculated statistical value (for example, the effective value) is used as information indicating the degree of wear of the ball screw 1. As a result, the noise resistance can be improved, and the determination accuracy of the degree of wear of the ball screw 1 can be improved.

(Modification)

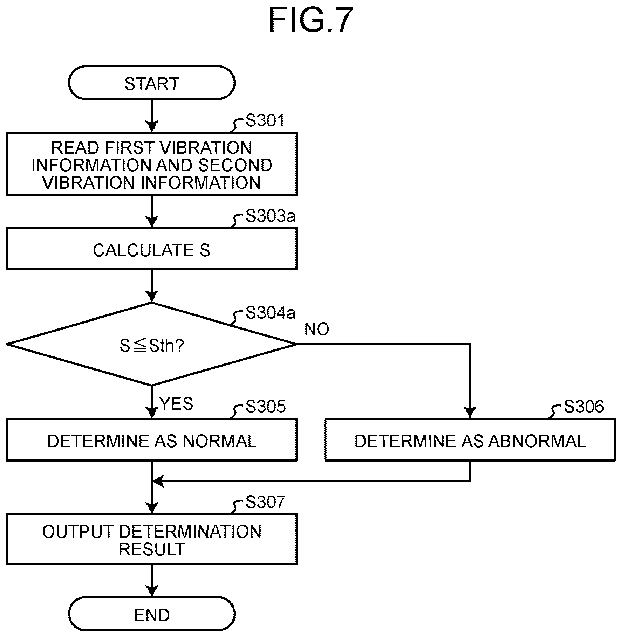

FIG. 7 is a flowchart illustrating an example of state determination processing according to a modification of the first embodiment. Note that a first vibration information acquisition processing and second vibration information acquisition processing according to the modification of the first embodiment are similar to those of the first embodiment described above, and thus detailed description thereof is omitted here. Incidentally, processing different from that of the first embodiment will be described in detail here, and detailed description of processing similar to that of the first embodiment may be omitted.

In the state determination processing according to the modification of the first embodiment, instead of the third vibration information generation processing (step S302) and the statistical value calculation processing (step S303) illustrated in FIG. 6, the processing unit 204 executes calculation processing of the degree of coincidence S of the first vibration information and the second vibration information read in step S301 (step S303a).

Specifically, the processing unit 204 calculates the degree of coincidence S between the first vibration information and the second vibration information by using a template matching method such as a sum of squared difference (SSD) or a sum of absolute difference (SAD). More specifically, the degree of coincidence (similarity) of the second vibration information with respect to the first vibration information is calculated using the first vibration information as a template image and the second vibration information as a search image. Note that, in a case where the SSD or the SAD is used as the template matching method, the smaller the value (degree of coincidence S) calculated by the processing unit 204 in step S303a is, the higher the degree of coincidence (similarity) of the second vibration information with respect to the first vibration information is, and the larger the value (degree of coincidence S) calculated by the processing unit 204 in step S303a is, the lower the degree of coincidence (similarity) of the second vibration information with respect to the first vibration information is.

In the state determination processing according to the modification of the first embodiment, the determination unit 202 determines the degree of wear of the ball screw 1 using the degree of coincidence S calculated by the processing unit 204.

Specifically, in the modification of the first embodiment, the determination unit 202 performs threshold value determination processing on the degree of coincidence S calculated by the processing unit 204 to perform state determination of the ball screw 1.

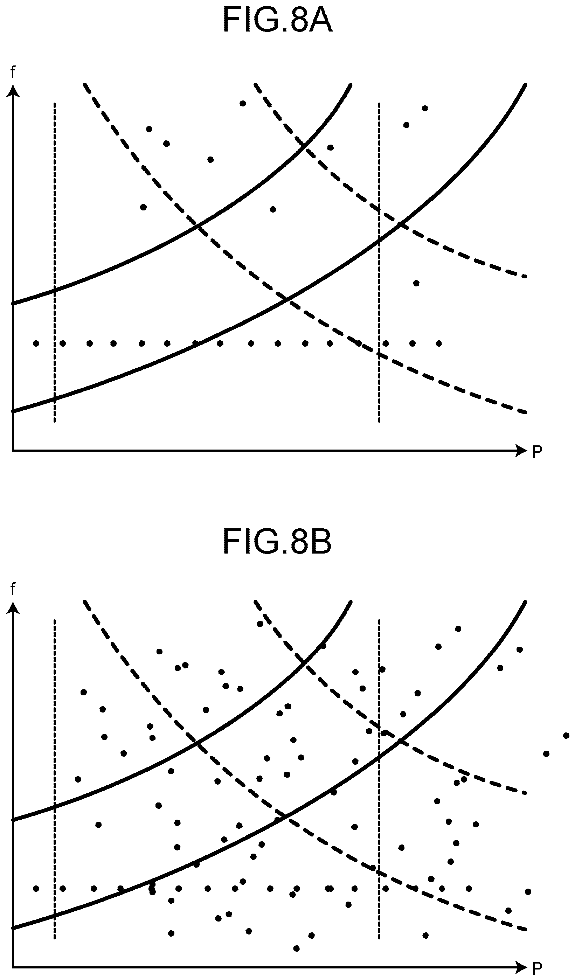

FIGS. 8A and 8B are conceptual diagrams illustrating examples of vibration information generated by the vibration information generating unit.

FIG. 8A exemplifies the second vibration information in a case where the degree of coincidence S calculated by the processing unit 204 is less than or equal to a threshold value Sth with respect to the first vibration information acquired in the first period in which it can be presumed that the pre-load is normally applied. FIG. 8B exemplifies the second vibration information in a case where the degree of coincidence S calculated by the processing unit 204 exceeds the threshold value Sth with respect to the first vibration information acquired in the first period in which it can be presumed that the pre-load is normally applied. The threshold value Sth is set by simulation as an upper limit value of the degree of coincidence at which the ball screw 1 is presumed to be normal.

As described above, the vibration information includes a vibration spectrum uncorrelated with each natural frequency in addition to the vibration spectrum corresponding to the natural frequency. Hereinafter, a vibration spectrum corresponding to each natural frequency is also referred to as a "stationary continuous spectrum". Meanwhile, a vibration spectrum component appearing on a broken line illustrated in FIGS. 8A and 8B is also referred to as a "nonstationary continuous spectrum". Furthermore, a point-shaped vibration spectrum component discretely appearing in FIGS. 8A and 8B is also referred to as a "discrete spectrum". In general, the nonstationary continuous spectra are vibration components that appear independently of the degree of wear of the ball screw 1. The discrete spectra include mechanical noise components generated at a production site or the like in addition to a periodic vibration component generated with the driving of the ball screw 1.

A decrease in the pre-load of the ball screw 1 progresses, which increases the vibration spectra caused by the wear of the ball screw 1, and the degree of coincidence S calculated by the processing unit 204 in step S303a increases.

Specifically, in the modification of the first embodiment, for example, the determination unit 202 determines whether or not the degree of coincidence S calculated in step S303a is less than or equal to the threshold value Sth held in advance (step S304a).

If the degree of coincidence S is less than or equal to the threshold value Sth ($S \leq$ Sth, step S304a; Yes), the determination unit 202 determines that the ball screw 1 is normal (step S305), outputs the determination result (step S307), and ends the state determination processing.

If the degree of coincidence S exceeds the threshold value Sth ($S >$ Sth, step S304a; No), the determination unit 202 determines that an abnormality has occurred in the ball screw 1 (step S306), outputs the determination result (step S307), and ends the state determination processing.

Note that, in the modification of the first embodiment described above, the SSD and the SAD are listed as examples of the template matching method; however, it is not limited thereto. For example, the degree of coincidence may be calculated by normalized cross-correlation (normalized cross-correlation (NCC) or zero-mean normalized cross-correlation (ZNCC)) or the like. Note that, in a case where NCC or ZNCC is used as the template matching method, the closer the numerical value is to 1, the higher the degree of coincidence (similarity) is. As the determination processing in the determination unit 202, it is only required to adopt an optimal determination method depending on the template matching method of the processing unit 204 in step S303a.

In the processing according to the modification of the first embodiment described above, the degree of coincidence (similarity) of the second vibration information with respect to the first vibration information is adopted as information indicating the degree of wear of the ball screw 1. Also in the modification of the first embodiment, the noise resistance can be improved similarly to the first embodiment, and determination accuracy of the degree of wear of the ball screw 1 can be improved.

(Second Embodiment)

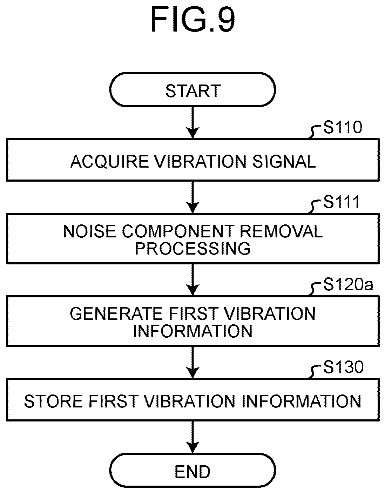

FIG. 9 is a flowchart illustrating an example of first vibration information acquisition processing according to a second embodiment. Note that second vibration information acquisition processing and state determination processing according to the second embodiment are similar to those of the first embodiment described above, and thus detailed description thereof is omitted here. Specifically, in the second embodiment, the state determination processing (processing of determining the degree of wear of the ball screw 1 using a statistical value of the third vibration information obtained by multiplying the first vibration information and the second vibration information) illustrated in FIG. 6 described in the first embodiment may be adopted, or the state determination processing (processing of determining the degree of wear of the ball screw 1 using the degree of coincidence (similarity) of the second vibration information with respect to the first vibration information) illustrated in FIG. 7 may be adopted. Incidentally, processing different from that of the first embodiment will be described in detail here, and detailed description of processing similar to that of the first embodiment may be omitted.

In the first vibration information acquisition processing according to the second embodiment illustrated in FIG. 9, the vibration information generating unit 201 executes noise component removal processing on the vibration signal acquired in step S110 (step S111).

Specifically, in step S111, the vibration information generating unit 201 removes a periodic vibration component of the vibration signal as a noise component by using, for example, cepstrum pre-whitening (CPW) processing or cepstrum editing process (CEP) processing including CPW.

Then, the vibration information generating unit 201 generates first vibration information on the basis of the vibration signal from which the noise component has been removed (step S120a), stores the first vibration information in the storage unit 203 (step S130), and ends the first vibration information acquisition processing.

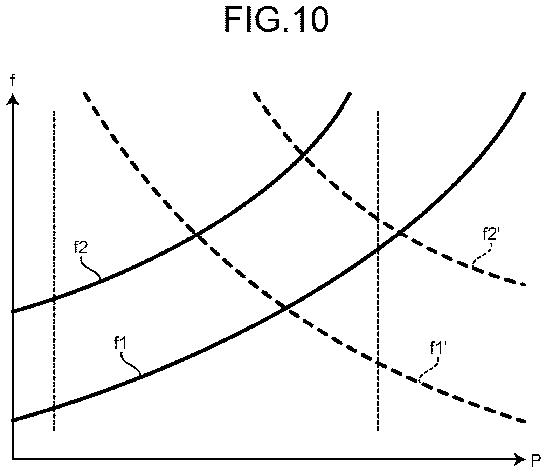

FIG. 10 is a conceptual diagram illustrating an example of the first vibration information generated by the first vibration information acquisition processing according to the second embodiment. By executing the noise component removal processing (step S111) on the first vibration information acquired in the first period in which it is presumed that the pre-load is normally applied, as illustrated in FIG. 10, the first vibration information from which the discrete spectra described in FIGS. 8A and 8B are removed is obtained. As a result, the noise resistance can be improved as compared with that of the first embodiment, and the determination accuracy of the degree of wear of the ball screw 1 can be improved.

(Third Embodiment)

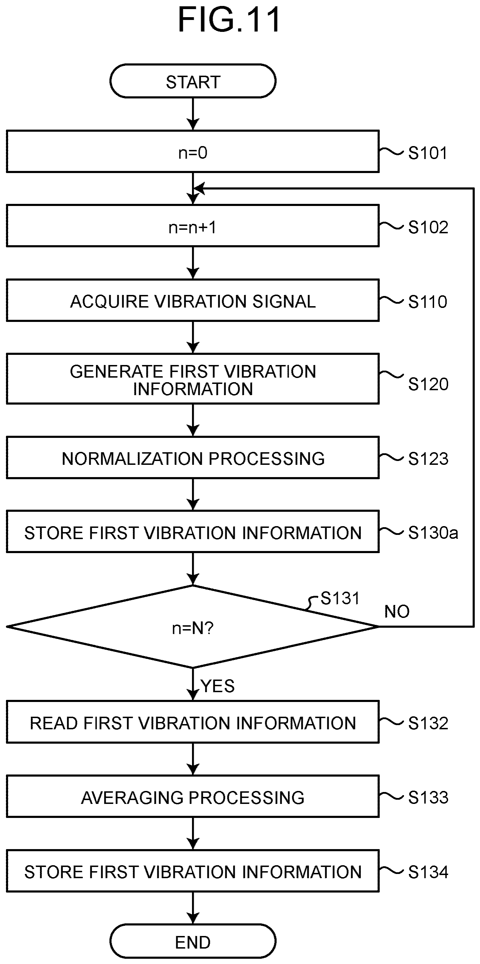

FIG. 11 is a flowchart illustrating an example of first vibration information acquisition processing according to a third embodiment. Note that second vibration information acquisition processing and state determination processing according to the third embodiment are similar to those of the first embodiment described above, and thus detailed description thereof is omitted here. Specifically, in the third embodiment, the state determination processing (processing of determining the degree of wear of the ball screw 1 using a statistical value of the third vibration information obtained by multiplying the first vibration information and the second vibration information) illustrated in FIG. 6 described in the first embodiment may be adopted, or the state determination processing (processing of determining the degree of wear of the ball screw 1 using the degree of coincidence (similarity) of the second vibration information with respect to the first vibration information) illustrated in FIG. 7 may be adopted. Incidentally, processing different from that of the first embodiment will be described in detail here, and detailed description of processing similar to that of the first embodiment may be omitted.

In the first vibration information acquisition processing according to the third embodiment illustrated in FIG. 11, a state determination device 2 acquires a plurality of pieces of first vibration information in a first period in which it is assumed that a pre-load is normally applied. Specifically, the state determination device 2 resets the number n of times of acquisition of the first vibration information (n = 0, step S101), counts up the number n of times of acquisition of the first vibration information (n = n + 1, step S102), and operates the ball screw 1 to acquire the first vibration information. In the third embodiment, the first vibration information is acquired ten times or more in the first period until which is about 1/10 of the period presumed as the operation period of the ball screw 1 elapses (N $\geq$ 10).

The vibration information generating unit 201 acquires the vibration signal converted into digital data by the AD conversion processing unit (not illustrated) (step S110) and generates the first vibration information indicating the relationship between the nut position of the ball screw 1 and the vibration level for each frequency on the basis of the acquired vibration signal (step S120).

Subsequently, the vibration information generating unit 201 executes normalization processing of the first vibration information generated in step S120 (step S123).

Specifically, the vibration information generating unit 201 executes standardization processing of the first vibration information generated in step S120. More specifically, the vibration information generating unit 201 scales the average of the first vibration information to "0" and the standard deviation (or variance) to "1".

Alternatively, the vibration information generating unit 201 may execute normalization processing of the first vibration information generated in step S120 instead of the standardization processing. More specifically, the vibration information generating unit 201 may scale the minimum of the first vibration information to "-1" (or "0") and the maximum to "1".

Then, the vibration information generating unit 201 stores the normalized first vibration signal in the storage unit 203 (step S130a) and determines whether or not the number of times of acquisition n of the first vibration information is N (n = N, step S131). If the number n of times of acquisition of the first vibration information is less than N (n < N, step S131; No), the process returns to step S102, the number of times of acquisition n of the first vibration information is counted up (n = n + 1, step S102), and the processing in and step S110 and subsequent steps are repeatedly executed.

The processing after step S110 may be executed, for example, at the time of activation of the ball screw 1 or may be executed, for example, at a predetermined time or every lapse of a predetermined time. It is desirable that an execution interval of the processing in step S110 and subsequent steps be set in such a manner as to be able to satisfy step S131 within the first period defined as the acquisition period of the first vibration information. Alternatively, in a case where the first period has elapsed before step S131 is satisfied, the first period is desirably extended until the number of times of acquisition n of the first vibration information reaches N.

After acquiring N pieces of first vibration information, the vibration information generating unit 201 reads the N pieces of first vibration information stored in the storage unit 203 (step S132) and executes averaging processing of the read N pieces of first vibration information (step S133). More specifically, the vibration information generating unit 201 calculates an average value of vibration values of coordinates corresponding to each other among the N pieces of first vibration information.

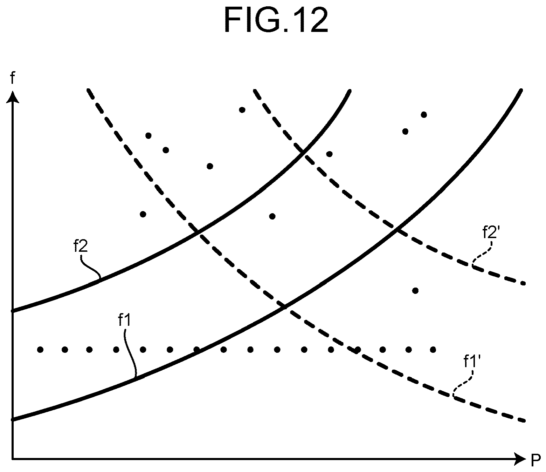

FIG. 12 is a conceptual diagram illustrating an example of the first vibration information generated by the first vibration information acquisition processing according to the third embodiment. By normalizing each of the plurality of pieces of first vibration information acquired in the first period in which a state is presumed in which the preload is normally applied and further executing averaging processing of the plurality of pieces of normalized first vibration information, the first vibration information from which the nonstationary continuous spectra described in FIGS. 8A and 8B are removed is obtained as illustrated in FIG. 12. As a result, the noise resistance can be improved as compared with that of the first embodiment, and the determination accuracy of the degree of wear of the ball screw 1 can be improved.

(Modification)

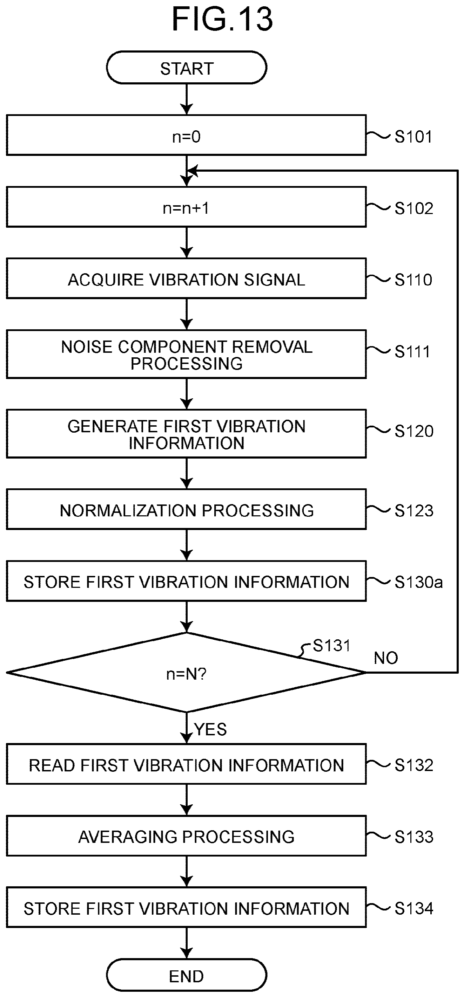

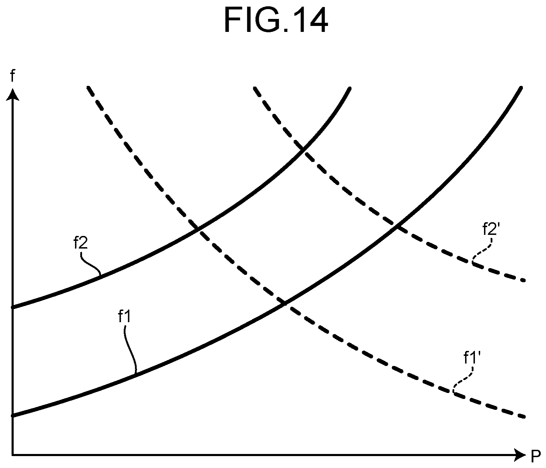

FIG. 13 is a flowchart illustrating an example of first vibration information acquisition processing according to a modification of the third embodiment. FIG. 14 is a conceptual diagram illustrating an example of first vibration information generated by the first vibration information acquisition processing according to the modification of the third embodiment. Note that second vibration information acquisition processing and state determination processing according to the third embodiment are similar to those of the third embodiment described above, and thus detailed description thereof is omitted here. Incidentally, processing different from that of the third embodiment will be described in detail here, and detailed description of processing similar to that of the third embodiment may be omitted.

In the first vibration information acquisition processing according to the modification of the third embodiment, the noise component removal processing (step S111) of the second embodiment is combined with the first vibration information acquisition processing according to the third embodiment described above. As a result, as illustrated in FIG. 14, the first vibration information from which the discrete spectra and the nonstationary continuous spectra described in FIGS. 8A and 8B are removed is obtained. As a result, the noise resistance can be further improved as compared with that of the second embodiment and the third embodiment, and the determination accuracy of the degree of wear of the ball screw 1 can be improved.

(Fourth Embodiment)

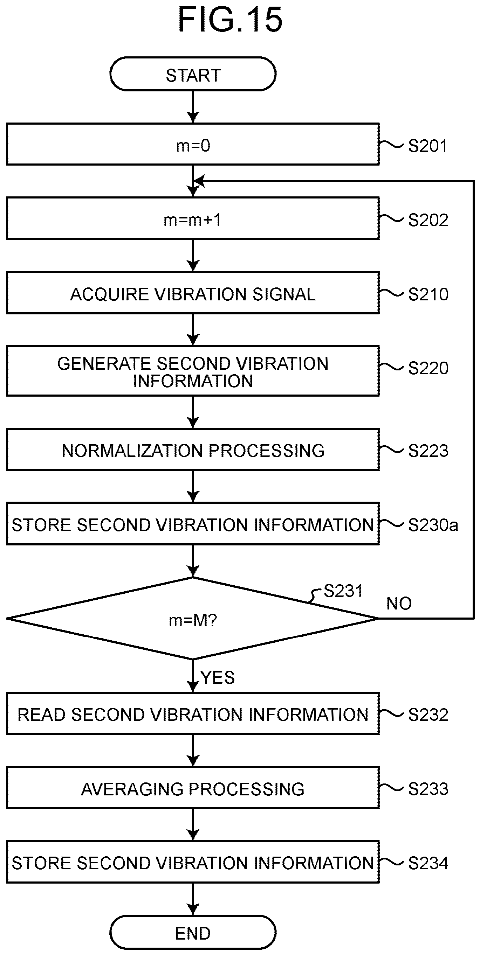

FIG. 15 is a flowchart illustrating an example of second vibration information acquisition processing according to a fourth embodiment. Note that first vibration information acquisition processing and state determination processing according to the fourth embodiment are similar to those of the third embodiment, and thus detailed description thereof is omitted here. Specifically, in the fourth embodiment, the state determination processing (processing of determining the degree of wear of the ball screw 1 using a statistical value of the third vibration information obtained by multiplying the first vibration information and the second vibration information) illustrated in FIG. 6 described in the first embodiment may be adopted, or the state determination processing (processing of determining the degree of wear of the ball screw 1 using the degree of coincidence (similarity) of the second vibration information with respect to the first vibration information) illustrated in FIG. 7 may be adopted. Incidentally, processing different from that of the third embodiment will be described in detail here, and detailed description of processing similar to that of the third embodiment may be omitted.

In the second vibration information acquisition processing according to the fourth embodiment illustrated in FIG. 15, the state determination device 2 operates the ball screw 1 in the second period in which the state determination of the ball screw 1 is performed after the first period in which the first vibration information has been generated and acquires a plurality of pieces of second vibration information. Specifically, the state determination device 2 resets the number of times of acquisition m of the second vibration information (m = 0, step S201), counts up the number of times of acquisition m of the second vibration information (m = m + 1, step S202), and acquires the second vibration information. The number of times of acquisition M of the second vibration information in the second period is, for example, similar to the number of times of acquisition N of the first vibration information. Specifically, the second vibration information is acquired, for example, ten times or more in the second period (M ≥ 10).

The vibration information generating unit 201 acquires the vibration signal converted into digital data by the AD conversion processing unit (not illustrated) (step S210) and generates the second vibration information indicating the relationship between the nut position of the ball screw 1 and the vibration level for each frequency on the basis of the acquired vibration signal (step S220).

Subsequently, the vibration information generating unit 201 executes normalization processing of the second vibration information generated in step S220 (step S223).

Specifically, the vibration information generating unit 201 executes standardization processing of the second vibration information generated in step S220. More specifically, the vibration information generating unit 201 scales the average of the second vibration information to "0" and the standard deviation (or variance) to "1".

Alternatively, the vibration information generating unit 201 may execute normalization processing of the first vibration information generated in step S220 instead of the standardization processing. More specifically, the vibration information generating unit 201 may scale the minimum of the second vibration information to "-1" (or "0") and the maximum to "1".

The normalization processing method for the second vibration information in the second vibration information acquisition processing according to the fourth embodiment is desirably the same as the normalization processing method of the first vibration information. Specifically, for example, in a case where the standardization processing of the first vibration information is executed in the first vibration information acquisition processing (step S123 in FIG. 11 or 13), it is desirable to execute the standardization processing of the second vibration information similarly in the second vibration information acquisition processing (step S223). Alternatively, for example, in a case where the normalization processing of the first vibration information is executed in the first vibration information acquisition processing (step S123 in FIG. 11 or 13), it is desirable to execute the normalization processing of the second vibration information similarly in the second vibration information acquisition processing (step S223).

Then, the vibration information generating unit 201 stores the normalized second vibration signal in the storage unit 203 (step S230a) and determines whether or not the number of times of acquisition m of the second vibration information is M (m = M, step S231). If the number of times of acquisition m of the second vibration information is less than M (m < M, step S231; No), the process returns to step S202, the number of times of acquisition m of the second vibration information is counted up (m = m + 1, step S202), and the processing in step S210 and subsequent steps are repeatedly executed.

After acquiring the M pieces of second vibration information, the vibration information generating unit 201 reads the M pieces of second vibration information stored in the storage unit 203 (step S232) and executes averaging processing of the read M pieces of second vibration information (step S233). More specifically, the vibration information generating unit 201 calculates an average value of vibration values of coordinates corresponding to each other among the M pieces of second vibration information.

In the processing according to the fourth embodiment described above, the plurality of pieces of second vibration information acquired a plurality of times is each normalized, and the averaging processing of the plurality of pieces of normalized second vibration information is executed, whereby highly accurate second vibration information from which the nonstationary continuous spectra described in FIGS. 8A and 8B are removed can be obtained similarly to the first vibration information. As a result, the noise resistance can be improved as compared with that of the third embodiment, and the determination accuracy of the degree of wear of the ball screw 1 can be further improved.

(Modification)

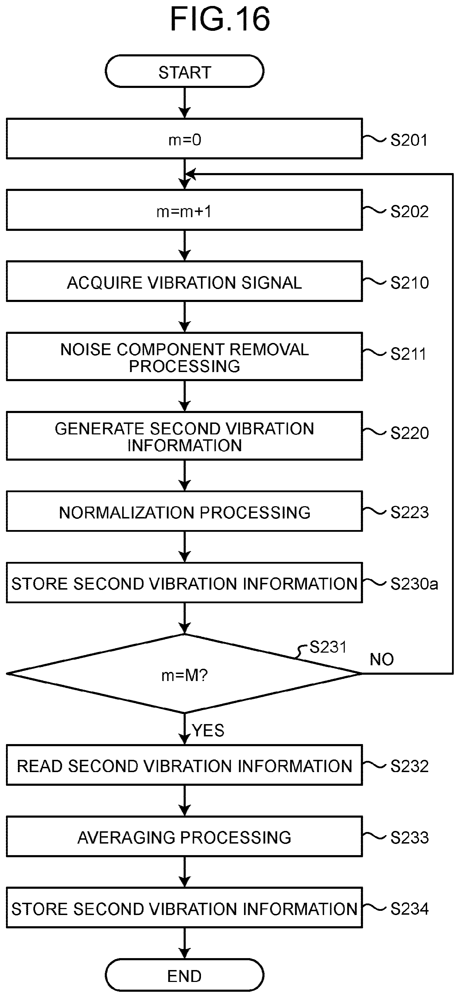

FIG. 16 is a flowchart illustrating an example of second vibration information acquisition processing according to a modification of the fourth embodiment. Note that first vibration information acquisition processing and state determination processing according to the modification of the fourth embodiment are similar to those of the fourth embodiment described above, and thus detailed description thereof is omitted here. Incidentally, processing different from the second vibration information acquisition processing according to the fourth embodiment will be described in detail here, and detailed description of processing similar to that of the fourth embodiment may be omitted.

In the second vibration information acquisition processing according to the modification of the fourth embodiment, noise component removal processing (step S211) similar to the noise component removal processing (step S111) for the first vibration information of the second embodiment is combined with the second vibration information acquisition processing according to the fourth embodiment described above. As a result, similarly to the first vibration information obtained by the first vibration information acquisition processing according to the modification of the third embodiment, the discrete spectra and the nonstationary continuous spectra described in FIGS. 8A and 8B are removed, and the second vibration information with higher accuracy can be obtained. As a result, the noise resistance can be further improved as compared with that of the fourth embodiment, and the determination accuracy of the degree of wear of the ball screw 1 can be further improved.

As described above, according to the state determination device 2 and the state determination method for the ball screw 1 according to the embodiments of the present disclosure and the modifications thereof, it is possible to improve the noise resistance and to improve the determination accuracy of the degree of wear of the ball screw 1.

Note that, as the vibration information, for example, binary information in which a vibration value greater than or equal to a predetermined value is set to "1" and a vibration value less than the predetermined value is set to "0" may be used.

Reference Signs List

1 BALL SCREW
2 STATE DETERMINATION DEVICE
3 DRIVE CONTROL DEVICE
11 SCREW SHAFT
12 NUT
13, 14 BEARING
15 MOTOR
21 VIBRATION SENSOR
201 VIBRATION INFORMATION GENERATING UNIT
202 DETERMINATION UNIT

203 STORAGE UNIT
204 PROCESSING UNIT

## Claims

1. A state determination device for a ball screw, comprising:

   a vibration information generating unit that generates vibration information indicating a relationship between a nut position of the ball screw and a frequency-vibration level characteristic that varies depending on to the nut position on a basis of a vibration signal acquired by a vibration sensor during operation of the ball screw; and
   a determination unit that executes state determination processing of the ball screw on a basis of first vibration information generated on a basis of a vibration signal acquired in a first period and second vibration information acquired in a second period after the first period.

2. The state determination device for a ball screw according to claim 1, wherein

   the vibration information generating unit
   executes averaging processing of a plurality of pieces of first vibration information acquired in the first period.

3. The state determination device for a ball screw according to claim 1, wherein

   the vibration information generating unit
   generates first vibration information from which a periodic vibration component of the vibration signal acquired in the first period is removed.

4. The state determination device for a ball screw according to claim 3, wherein

   the vibration information generating unit
   executes averaging processing of a plurality of pieces of first vibration information acquired in the first period.

5. The state determination device for a ball screw according to claim 4, wherein

   the vibration information generating unit
   executes averaging processing of a plurality of pieces of second vibration information acquired in the second period.

6. The state determination device for a ball screw according to claim 5, wherein

   the vibration information generating unit
   generates second vibration information from which a periodic vibration component of a vibration signal acquired in the second period is removed.

7. The state determination device for a ball screw according to any one of claims 1 to 6, further comprising:
   a processing unit that calculates third vibration information obtained by multiplying the second vibration information by the first vibration information.

8. The state determination device for a ball screw according to claim 7, wherein

   the determination unit
   determines a degree of wear of the ball screw on a basis of a statistical value of the third vibration information.

9. The state determination device for a ball screw according to any one of claims 1 to 6, further comprising:
   a processing unit that calculates a degree of coincidence of the second vibration information with respect to the first vibration information.

10. The state determination device for a ball screw according to claim 9, wherein

the determination unit
determines a degree of wear of the ball screw on a basis of the degree of coincidence.

11. A state determination method for a ball screw, comprising:

a first step of generating first vibration information indicating a relationship between a nut position of the ball screw and a frequency-vibration level characteristic that varies depending on the nut position on a basis of a vibration signal acquired during operation of the ball screw in a first period;
a second step of generating second vibration information indicating a relationship between the nut position of the ball screw and the frequency-vibration level characteristic that varies depending on the nut position on a basis of a vibration signal acquired during operation of the ball screw in a second period after the first period; and
a third step of executing state determination processing of the ball screw on a basis of the first vibration information and the second vibration information.

12. The state determination method for a ball screw according to claim 11, wherein

the first step includes
executing averaging processing of a plurality of pieces of first vibration information acquired in the first period.

13. The state determination method for a ball screw according to claim 11, wherein

the first step includes
generating first vibration information from which a periodic vibration component of the vibration signal acquired in the first period is removed.

14. The state determination method for a ball screw according to claim 13, wherein

the first step includes
executing averaging processing of a plurality of pieces of first vibration information acquired in the first period.

15. The state determination method for a ball screw according to claim 14, wherein

the second step includes
executing averaging processing of a plurality of pieces of second vibration information acquired in the second period.

16. The state determination method for a ball screw according to claim 15, wherein

the second step includes
generating second vibration information from which a periodic vibration component of a vibration signal acquired in the second period is removed.

17. The state determination method for a ball screw according to any one of claims 11 to 16, wherein

the third step includes
calculating third vibration information obtained by multiplying the second vibration information by the first vibration information.

18. The state determination method for a ball screw according to claim 17, wherein

the third step includes
determining a degree of wear of the ball screw on a basis of a statistical value of the third vibration information.

19. The state determination method for a ball screw according to any one of claims 11 to 16, wherein

the third step includes
calculating a degree of coincidence of the second vibration information with respect to the first vibration information.

**20.** The state determination method for a ball screw according to claim 19, wherein

the third step includes
determining a degree of wear of the ball screw on a basis of the degree of coincidence.

# FIG.1

EP 4 726 351 A1

# FIG.2

# FIG.3A

# FIG.3B

# FIG.4

```
        ┌─────────────┐
        │    START    │
        └─────────────┘
               │
               ▼                    ⌐S110
┌───────────────────────────────────┐
│      ACQUIRE VIBRATION SIGNAL      │
└───────────────────────────────────┘
               │
               ▼                    ⌐S120
┌───────────────────────────────────┐
│      GENERATE FIRST VIBRATION      │
│            INFORMATION             │
└───────────────────────────────────┘
               │
               ▼                    ⌐S130
┌───────────────────────────────────┐
│   STORE FIRST VIBRATION INFORMATION│
└───────────────────────────────────┘
               │
               ▼
        ┌─────────────┐
        │     END     │
        └─────────────┘
```

# FIG.5

```
        ┌─────────────┐
        │    START    │
        └─────────────┘
               │
               ▼                    ⌐S210
┌───────────────────────────────────┐
│      ACQUIRE VIBRATION SIGNAL      │
└───────────────────────────────────┘
               │
               ▼                    ⌐S220
┌───────────────────────────────────┐
│     GENERATE SECOND VIBRATION      │
│            INFORMATION             │
└───────────────────────────────────┘
               │
               ▼                    ⌐S230
┌───────────────────────────────────┐
│  STORE SECOND VIBRATION INFORMATION│
└───────────────────────────────────┘
               │
               ▼
        ┌─────────────┐
        │     END     │
        └─────────────┘
```

# FIG.6

START

READ FIRST VIBRATION INFORMATION AND SECOND VIBRATION INFORMATION — S301

GENERATE THIRD VIBRATION INFORMATION — S302

CALCULATE Vrms — S303

Vrms≧Vth? — S304

NO

YES — S305

DETERMINE AS NORMAL

DETERMINE AS ABNORMAL — S306

OUTPUT DETERMINATION RESULT — S307

END

# FIG.7

```
                    ┌──────────────┐
                    │    START     │
                    └──────┬───────┘
                           │  ╭─S301
                    ┌──────▼───────────────┐
                    │  READ FIRST VIBRATION │
                    │ INFORMATION AND SECOND│
                    │  VIBRATION INFORMATION│
                    └──────┬───────────────┘
                           │  ╭─S303a
                    ┌──────▼───────┐
                    │  CALCULATE S │
                    └──────┬───────┘
                           │  ╭─S304a
                        ◇─────────◇          NO
                     S ≦ Sth?      ────────────┐
                        ◇─────────◇            │
                           │YES  ╭─S305         │  ╭─S306
              ┌────────────▼──────┐   ┌─────────▼──────────────┐
              │ DETERMINE AS NORMAL│   │ DETERMINE AS ABNORMAL │
              └────────────┬──────┘   └─────────┬──────────────┘
                           │◄───────────────────┘
                           │  ╭─S307
                    ┌──────▼───────┐
                    │ OUTPUT DETERMINATION │
                    │      RESULT  │
                    └──────┬───────┘
                    ┌──────▼───────┐
                    │     END      │
                    └──────────────┘
```

# FIG.8A

# FIG.8B

# FIG.9

```
        ┌─────────────┐
        │    START    │
        └──────┬──────┘
               │            ┌S110
        ┌──────▼──────────────┐
        │ ACQUIRE VIBRATION SIGNAL │
        └──────┬──────────────┘
               │            ┌S111
        ┌──────▼──────────────┐
        │ NOISE COMPONENT REMOVAL │
        │       PROCESSING       │
        └──────┬──────────────┘
               │            ┌S120a
        ┌──────▼──────────────┐
        │  GENERATE FIRST VIBRATION │
        │        INFORMATION       │
        └──────┬──────────────┘
               │            ┌S130
        ┌──────▼──────────────┐
        │ STORE FIRST VIBRATION INFORMATION │
        └──────┬──────────────┘
               │
        ┌──────▼──────┐
        │     END     │
        └─────────────┘
```

# FIG.10

# FIG.11

START

n=0 — S101

n=n+1 — S102

ACQUIRE VIBRATION SIGNAL — S110

GENERATE FIRST VIBRATION INFORMATION — S120

NORMALIZATION PROCESSING — S123

STORE FIRST VIBRATION INFORMATION — S130a

n=N? — S131    NO

YES

READ FIRST VIBRATION INFORMATION — S132

AVERAGING PROCESSING — S133

STORE FIRST VIBRATION INFORMATION — S134

END

## FIG.12

# FIG.13

```
              ┌──────────┐
              │  START   │
              └──────────┘
                   │
                   ▼
        ┌─────────────────────┐
        │        n=0          │──  S101
        └─────────────────────┘
                   │
                   ▼ ◄──────────────────────┐
        ┌─────────────────────┐             │
        │       n=n+1         │──  S102      │
        └─────────────────────┘             │
                   │                         │
                   ▼                         │
        ┌─────────────────────┐             │
        │ ACQUIRE VIBRATION   │──  S110      │
        │       SIGNAL        │             │
        └─────────────────────┘             │
                   │                         │
                   ▼                         │
        ┌─────────────────────┐             │
        │ NOISE COMPONENT     │──  S111      │
        │ REMOVAL PROCESSING  │             │
        └─────────────────────┘             │
                   │                         │
                   ▼                         │
        ┌─────────────────────┐             │
        │ GENERATE FIRST      │──  S120      │
        │ VIBRATION INFORMATION│            │
        └─────────────────────┘             │
                   │                         │
                   ▼                         │
        ┌─────────────────────┐             │
        │ NORMALIZATION       │──  S123      │
        │ PROCESSING          │             │
        └─────────────────────┘             │
                   │                         │
                   ▼                         │
        ┌─────────────────────┐             │
        │ STORE FIRST         │──  S130a     │
        │ VIBRATION INFORMATION│            │
        └─────────────────────┘             │
                   │                         │
                   ▼                      NO │
              ◇ n=N? ◇ ── S131 ─────────────┘
                   │ YES
                   ▼
        ┌─────────────────────┐
        │ READ FIRST          │──  S132
        │ VIBRATION INFORMATION│
        └─────────────────────┘
                   │
                   ▼
        ┌─────────────────────┐
        │ AVERAGING           │──  S133
        │ PROCESSING          │
        └─────────────────────┘
                   │
                   ▼
        ┌─────────────────────┐
        │ STORE FIRST         │──  S134
        │ VIBRATION INFORMATION│
        └─────────────────────┘
                   │
                   ▼
              ┌──────────┐
              │   END    │
              └──────────┘
```

# FIG.14

# FIG.15

```
           START
             │
             ▼
┌──────────────────────────────┐
│            m=0               │～S201
└──────────────────────────────┘
             │
             ▼ ◄──────────────────────┐
┌──────────────────────────────┐      │
│           m=m+1              │～S202 │
└──────────────────────────────┘      │
             │                        │
             ▼                        │
┌──────────────────────────────┐      │
│   ACQUIRE VIBRATION SIGNAL    │～S210 │
└──────────────────────────────┘      │
             │                        │
             ▼                        │
┌──────────────────────────────┐      │
│   GENERATE SECOND VIBRATION  │～S220 │
│        INFORMATION           │      │
└──────────────────────────────┘      │
             │                        │
             ▼                        │
┌──────────────────────────────┐      │
│   NORMALIZATION PROCESSING    │～S223 │
└──────────────────────────────┘      │
             │                        │
             ▼                        │
┌──────────────────────────────┐      │
│ STORE SECOND VIBRATION INFORMATION │～S230a │
└──────────────────────────────┘      │
             │                        │
             ▼          ┌S231         │
          ╱───────────────────╲   NO  │
         ╱       m=M?          ╲──────┘
          ╲───────────────────╱
             │ YES
             ▼
┌──────────────────────────────┐
│ READ SECOND VIBRATION INFORMATION │～S232
└──────────────────────────────┘
             │
             ▼
┌──────────────────────────────┐
│     AVERAGING PROCESSING      │～S233
└──────────────────────────────┘
             │
             ▼
┌──────────────────────────────┐
│ STORE SECOND VIBRATION INFORMATION │～S234
└──────────────────────────────┘
             │
             ▼
            END
```

# FIG.16

```
          ┌─────────────┐
          │   START     │
          └─────────────┘
                 │
                 ▼
    ┌────────────────────────┐
    │         m=0            │─── S201
    └────────────────────────┘
                 │
                 ▼
    ┌────────────────────────┐
    │        m=m+1           │─── S202
    └────────────────────────┘
                 │
                 ▼
    ┌────────────────────────┐
    │ ACQUIRE VIBRATION SIGNAL│─── S210
    └────────────────────────┘
                 │
                 ▼
    ┌────────────────────────┐
    │ NOISE COMPONENT REMOVAL │─── S211
    │      PROCESSING         │
    └────────────────────────┘
                 │
                 ▼
    ┌────────────────────────┐
    │ GENERATE SECOND VIBRATION│─── S220
    │      INFORMATION        │
    └────────────────────────┘
                 │
                 ▼
    ┌────────────────────────┐
    │ NORMALIZATION PROCESSING│─── S223
    └────────────────────────┘
                 │
                 ▼
    ┌────────────────────────────┐
    │STORE SECOND VIBRATION INFORMATION│─── S230a
    └────────────────────────────┘
                 │
                 ▼
            ◇ m=M? ◇─── S231  NO
                 │ YES
                 ▼
    ┌────────────────────────────┐
    │READ SECOND VIBRATION INFORMATION│─── S232
    └────────────────────────────┘
                 │
                 ▼
    ┌────────────────────────┐
    │  AVERAGING PROCESSING   │─── S233
    └────────────────────────┘
                 │
                 ▼
    ┌────────────────────────────┐
    │STORE SECOND VIBRATION INFORMATION│─── S234
    └────────────────────────────┘
                 │
                 ▼
          ┌─────────────┐
          │     END     │
          └─────────────┘
```

## INTERNATIONAL SEARCH REPORT

| International application No. |
|---|
| **PCT/JP2024/000793** |

### A. CLASSIFICATION OF SUBJECT MATTER

*G01M 13/028*(2019.01)i; *F16H 25/24*(2006.01)i
FI: G01M13/028; F16H25/24 E

According to International Patent Classification (IPC) or to both national classification and IPC

### B. FIELDS SEARCHED

Minimum documentation searched (classification system followed by classification symbols)

G01M13/00-13/045, 99/00; F16H19/00-37/16, 49/00; G01H1/00-17/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2013-257253 A (NSK LTD.) 26 December 2013 (2013-12-26) paragraphs [0013]-[0018], fig. 1-2 | 1-6, 9-16, 19-20 |
| A | | 7-8, 17-18 |
| Y | JP 2019-105317 A (THK CO., LTD.) 27 June 2019 (2019-06-27) claim 1, paragraphs [0025]-[0028], fig. 5 | 1-6, 9-16, 19-20 |
| Y | JP 2007-285874 A (NSK LTD.) 01 November 2007 (2007-11-01) paragraph [0023] | 2, 4-6, 9-10, 12, 14-16, 19-20 |
| Y | JP 2016-31307 A (JFE ADVANTECH CO., LTD.) 07 March 2016 (2016-03-07) paragraph [0002] | 3-6, 9-10, 13-16, 19-20 |
| Y | JP 2019-168412 A (NTN CORPORATION) 03 October 2019 (2019-10-03) paragraph [0030] | 9-10, 19-20 |

☑ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **14 February 2024** | **27 February 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT

International application No.

**PCT/JP2024/000793**

### C.    DOCUMENTS CONSIDERED TO BE RELEVANT

| Category* | Citation of document, with indication, where appropriate, of the relevant passages | Relevant to claim No. |
|---|---|---|
| A | CN 110781612 A (HIT ROBOT (SHANDONG) INTELLIGENT EQUIPMENT RESEARCH INSTITUTE) 11 February 2020 (2020-02-11) entire text, all drawings | 1-20 |
| A | US 2015/0147007 A1 (HIWIN TECHNOLOGIES CORP.) 28 May 2015 (2015-05-28) entire text, all drawings | 1-20 |

Form PCT/ISA/210 (second sheet) (July 2022)

## INTERNATIONAL SEARCH REPORT
### Information on patent family members

International application No.

**PCT/JP2024/000793**

| Patent document cited in search report | | | Publication date (day/month/year) | Patent family member(s) | | | Publication date (day/month/year) |
|---|---|---|---|---|---|---|---|
| JP | 2013-257253 | A | 26 December 2013 | (Family: none) | | | |
| JP | 2019-105317 | A | 27 June 2019 | US | 2021/0164546 | A1 | |
| | | | | claim 1, paragraphs [0032]-[0035], fig. 5 | | | |
| | | | | WO | 2019/117152 | A1 | |
| | | | | DE | 112018006387 | T | |
| | | | | TW | 201928234 | A | |
| | | | | CN | 111448404 | A | |
| JP | 2007-285874 | A | 01 November 2007 | (Family: none) | | | |
| JP | 2016-31307 | A | 07 March 2016 | (Family: none) | | | |
| JP | 2019-168412 | A | 03 October 2019 | (Family: none) | | | |
| CN | 110781612 | A | 11 February 2020 | (Family: none) | | | |
| US | 2015/0147007 | A1 | 28 May 2015 | DE | 102010017113 | A1 | |

Form PCT/ISA/210 (patent family annex) (July 2022)

**EP 4 726 351 A1**

**REFERENCES CITED IN THE DESCRIPTION**

**Patent documents cited in the description**

- JP 2009198398 A

- WO 2020090479 A